# EUROPÄISCHE PATENTSCHRIFT

(11) **EP 1 523 437 B1**
(45) Veröffentlichungstag und Bekanntmachung des Hinweises auf die Patenterteilung: **23.01.2008**
(21) Anmeldenummer: 03764938.1
(22) Anmeldetag: 04.07.2003
(51) Int. Cl.: B62D 25/08, B60K 11/04

(54) **MONTAGETRÄGER FÜR FRONTMODUL**
MOUNTING SUPPORT FOR A FRONT-END MODULE
SUPPORT DE MONTAGE POUR MODULE FRONTAL

(30) Priorität: 18.07.2002 DE 10233859
(43) Veröffentlichungstag der Anmeldung: 20.04.2005
(73) Patentinhaber: HBPO GmbH, 59557 Lippstadt (DE)
(72) Erfinder: KERSTING, Dirk, 59555 Lippstadt (DE)
(74) Vertreter: Heumann, Christian
(86) Internationale Anmeldenummer: PCT/EP2003/007166
(87) Internationale Veröffentlichungsnummer: WO 2004/009427

(56) Entgegenhaltungen:
- EP-A- 1 055 535
- DE-A- 19 843 928
- US-A- 5 046 554
- US-B1- 6 298 906
- US-B1- 6 364 403
- PATENT ABSTRACTS OF JAPAN vol. 009, no. 152 (M-391), 27. Juni 1985 (1985-06-27) -& JP 60 027723 A (NISSAN JIDOSHA KK), 12. Februar 1985 (1985-02-12)
- PATENT ABSTRACTS OF JAPAN vol. 1999, no. 10, 31. August 1999 (1999-08-31) -& JP 11 129935 A (AISIN SEIKI CO LTD), 18. Mai 1999 (1999-05-18)
- PATENT ABSTRACTS OF JAPAN vol. 017, no. 459 (M-1467), 23. August 1993 (1993-08-23) -& JP 05 105115 A (TOYOTA MOTOR CORP), 27. April 1993 (1993-04-27)

## Beschreibung

Die Erfindung betrifft einen Montageträger für ein Frontmodul eines Kraftfahrzeuges mit einem inneren, stirnseitigen Bereich zur Aufnahme von Wärmeübertragern und einem äußeren, sich außerhalb der Wärmeübertrager erstreckenden Strukturbereich nach dem Oberbegriff des Patentanspruches 1.

Ein durch die DE-A 198 10 864 bekannt gewordener.

Montageträger weist eine Tragstruktur aus Kunststoff und/oder Metall auf, die der Aufnahme und Befestigung von verschiedenen Fahrzeugteilen wie z. B. einem Kühlmittelkühler, einem Kältemittelkondensator oder einem Ladeluftkühler sowie von Scheinwerfern dient. Nach der Montage dieser Komponenten wird der gesamte Montageträger als Frontmodul oder Frontend in den Frontbereich des Fahrzeuges eingesetzt und dort befestigt, Im zentralen oder inneren Bereich befinden sich die Wärmeübertrager, die von der Umgebungsluft als Kühlluftstrom durchsetzt werden, wobei die Luft durch die Wärmeübertrager entweder infolge des Staudrucks gedrückt oder durch einen hinter dem Montageträger angeordneten Lüfter gesaugt wird. Für den Wirkungsgrad der Einheit Wärmeübertrager und Lüfter ist es von Bedeutung, dass der Lüfter keine Neben- oder "Falsch"-Luft ansaugt, sondern nur die durch den oder die Wärmeübertrager durchtretende Luftmenge. Daher muss der Bereich von der Austrittsebene der Wärmeübertrager bis zum Lüfter und dessen Austritt abgedichtet und kanalisiert werden. Darüber hinaus weist der Montageträger für ein Frontmodul eine über die Stirnfläche der Wärmeübertrager hinausgehende Stirnfläche auf, die als offene und damit luftdurchlässige Struktur ausgebildet ist. Dieser äußere über die Stirnfläche der Wärmeübertrager hinausgehende Bereich des Montageträgers muss ebenfalls abgedichtet werden, zumal die Gefahr besteht, dass der Lüfter im Wege der Rezirkulation die bereits geförderte, warme Luft wieder ansaugt.

Bei einem herkömmlichen Einbau des Kühlers im Kraftfahrzeug - also ohne Montageträger bzw. Frontmodul - wird der Kühlluftstrom durch eine so genannte Kühlerzarge und/oder Lüfterzarge geführt und kanalisiert - dies ist z. B. in der DE-C 33 04 297 beschrieben. Ein Axiallüfter ist als so genannter Mantellüfter ausgebildet und am Motorblock befestigt, während der Kühler an der Fahrzeugkarosserie befestigt ist. Zwischen Kühleraustritt und Lüftereintritt ist eine kühlerfeste Zarge für die Führung des Luftstroms in. Verbindung mit einer Einlaufdüse angeordnet.

Andere Einbaubeispiele für Kühler- und Lüfterzargen wurden durch die DE-A 35 36 457 oder die DE-A 40 31 567 bekannt, die Befestigungsmöglichkeiten der Kühlerzarge bzw. Lüfterhaube am Kühler zeigen, und zwar für einen vom Fahrzeugmotor angetriebenen Lüfter.

Wie in der DE-A 195 26 286 beschrieben, kann der Lüfter auch von einem Elektromotor angetrieben werden, der dann zusammen mit dem Lüfter als Elektrolüfter in der Lüfterzarge gelagert und am Kühler befestigt ist

Die EP 1 055 535 A1, die den Oberbegriff des Anspruchs 1 bildet, zeigt ein Frontendmodul, welches einerseits eine Tragstruktur (Montageträger) und andererseits eine Luftfördereinrichtung aufweist. Die Tragstruktur und die Lüftfördereinrichtung sind miteinander verbunden. Die Luftfördereinrichtung nimmt einerseits einen Lüfter und andererseits einen Kühler sowie einen Kondensator in sich auf. Der Kühler ist in einem Rahmen der Luftfördereinrichtung mittels Stiften und Muttern befestigt. Seitliche Führungsrippen an den Kästen des Kühlers bewirken eine Positionierung des Kühlers in der Luftfördereinrichtung. Zusätzlich ist auch der Kondensator über Stifte an Sammelrohren mit der Luftfördereinrichtung verbunden. Die Luftfördereinrichtung trägt somit die beiden Wärmeübertrager und ist ihrerseits fest mit der Tragstruktur verbunden.

Es ist Aufgabe der vorliegenden Erfindung, für einen Montageträger der eingangs genannten Art eine einfache, leicht montierbare und demontierbare Luftführung und Abdichtung zu schaffen, die einen hohen Wirkungsgrad des Lüfters und der Wärmeübertrager ergibt

Die Lösung dieser Aufgabe ergibt sich aus den Merkmalen des Patentanspruches 1. Durch die hinter dem Montageträger angeordnete und gegenüber diesem abgedichtete erweiterte Lüfterzarge ist einerseits sichergestellt, dass der Lüfter nur Frischluft durch die Wärmeübertrager ansaugt, und andererseits wird eine schädliche Rezirkulationsströmung infolge der Umfeldabdichtung durch die Lüfterzarge vermieden. Die Lüfterzarge ist an den Wärmeübertragern befestigt, während die Abdichtung der Lüfterzarge gegenüber dem Montageträger über einen peripheren Bereich erfolgt Hierbei ist eine berührungslose Abdichtung zwischen Lüfterzarge und Montageträger, z. B. eine Labyrinthdichtung vorteilhaft, um Relativbewegungen zwischen Lüfterzarge und Montageträger auszugleichen. Diese Relativbewegungen ergeben sich aufgrund der teilweise elastischen Lagerung und Abstützung der Wärmeübertrager gegenüber dem Montageträger und der Befestigung der Lüfterzarge an den Wärmeübertragern.

Nach einer vorteilhaften Weiterbildung der Erfindung sollen die Warmeübertrager von hinten, d. h. in Fahrtrichtung des Fahrzeuges in den Montageträger einsetzbar und montierbar sein. Dies hat den Vorteil, dass der Montageträger bei Reparaturarbeiten nach vorne, also in Fahrtrichtung entfernt werden kann, ohne dass die Wärmeübertrager wie Kühlmittelkühler, Kältermittelkondensator oder Ladeluftkühler von ihren Anschlüssen getrennt werden müssen. Ferner können im Bedarfsfalle die Wärmeübertrager einzeln aus ihrer Lagerposition im Montageträger entnommen werden - dazu müssen die Verbindungen zwischen Lüfterzarge und Wärmeübertragern gelöst werden.

Nach weiteren Ausgestaltungen der Erfindung kann in der Lüfterzarge ein Elektrolüfter befestigt werden, der somit Teil des Frontmoduls wird. Andererseits kann in der Öffnung der Lüfterzarge auch ein motorseitig befestigter und angetriebener Lüfter umlaufen.

Ein Ausführungsbeispiel der Erfindung ist in der Zeichnung dargestellt und wird im Folgenden näher beschreiben. Es zeigen
- Fig. 1: ein Frontmodul in einer Ansicht von vom,
- Fig. 2: das Frontmodul gemäß Fig. 1 in einer Ansicht von hinten,
- Fig. 3: eine schematische Schnittdarstellung des Frontmoduls mit Lüfterzarge und
- Fig. 4: eine vergrößerte Darstellung von Einzelheiten X und Y aus Fig. 3.

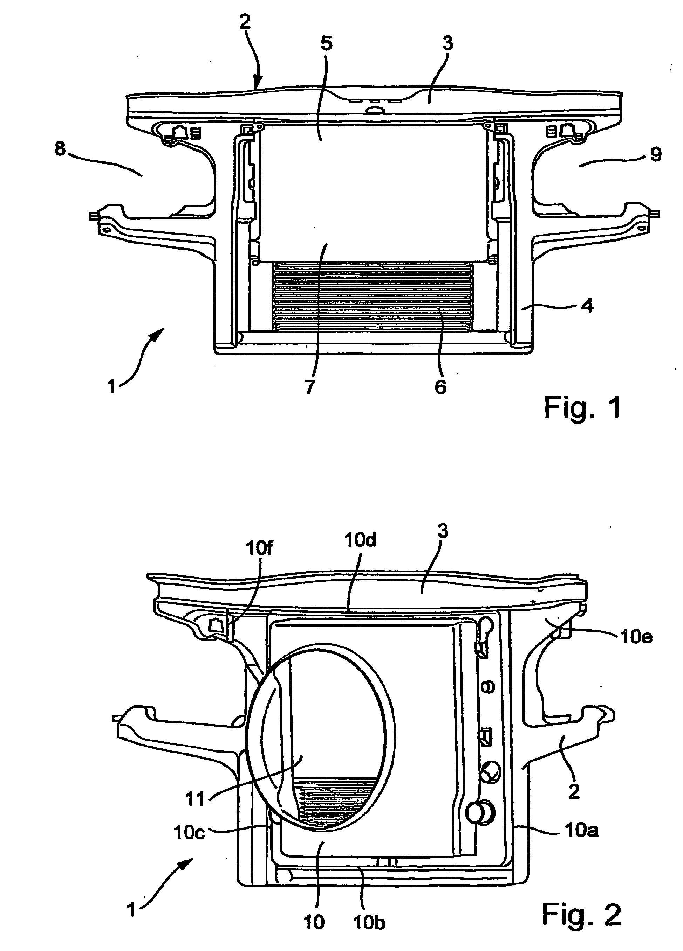

**Fig. 1** zeigt ein Frontmodul 1 für ein Kraftfahrzeug in einer Ansicht von vorne, d. h. entgegen der Fahrtrichtung des Kraftfahrzeuges. Das Frontmodul 1 besteht aus einem Montageträger 2, der einen festen Rahmen, beispielsweise aus einer Kunststoffstruktur, mit verschiedenen Befestigungspunkten zur Aufnahme von Fahrzeugkomponenten aufweist. Im Wesentlichen besteht dieser Montageträger 2 aus einem Querträger 3 und einem geschlossenen fensterartigen Rahmen 4. Innerhalb des Rahmens 4 sind Wärmeübertrager 5, 6 angeordnet und in nicht näher dargestellter Weise mit dem Rahmen 4 bzw. dem Montageträger 2 verbunden: in der Darstellung in Fig. 1 sind ein Kondensator 5 und darunter ein Ladeluftkühler 6 erkennbar. Hinter dem Kältemittelkondensator 5 befindet sich (verdeckt) ein Kühlmittelkühler für die Kühlung des Verbrennungsmotors des Fahrzeuges. Weitere Wärmeübertrager wie z. B. Ölkühler können an dem Montageträger befestigt werden. Der Bereich innerhalb des Rahmens 4 und des Querträgers 3, in dem die Wärmeübertrager 5, 6 aufgenommen sind, wird als innerer Bereich 7 bezeichnet, er entspricht der Gesamtstirnfläche der Wärmeübertrager 5, 6, die von Umgebungsluft durchströmt wird.

Im Übrigen weist der Montageträger 2 zwei seitliche Ausnehmungen 8, 9 auf, die der Aufnahme und Befestigung von nicht dargestellten Scheinwerfern dienen. Das komplettierte Frontmodul 1 wird in das Fahrzeug eingesetzt und dort befestigt.

**Fig. 2** zeigt eine Rückansicht des Frontmoduls 1 gemäß Fig. 1 mit einer Lüfterzarge 10, die am Montageträger 2 bzw. - was in dieser Darstellung nicht erkennbar ist - an den Wärmeübertragern befestigt ist. Die Lüfterzarge deckt etwa den gesamten hinteren Bereich des Frontmoduls ab und weist eine zentrale kreisförmige Öffnung 11 auf, in der ein nicht dargestellter Lüfter (Axiallüfter) umläuft. Die äußere Kontur der Lüfterzarge 10 wird durch etwa rechtwinklig zueinander verlaufende Kanten 10a, 10b, 10c, 10d begrenzt, wobei der Umriss der Lüfterzarge 10 auch an die Kontur des Montageträgers 2 angepasst ist, z. B. in den oberen Eckbereichen 10e, 10f. Die Lüfterzarge 10 ist - in hier nicht erkennbarer Weise - mit ihrer dem Montageträger 2 zugewandten Seite umfangseitig abgedichtet.

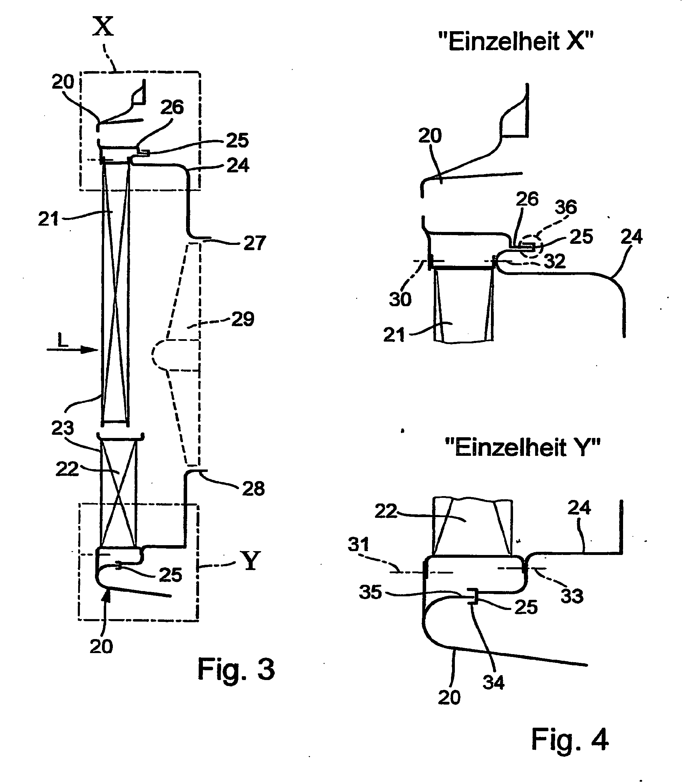

**Fig. 3** zeigt eine schematische Schnittdarstellung eines Montageträgers 20, der in seinem inneren Bereich zwei Wärmeübertrager, nämlich einen Kühlmittelkühler 21 und einen Ladeluftkühler 22, deren in einer gemeinsamen Ebene liegende Stirnflächen 23 von Umgebungsluft, dargestellt durch einen Pfeil L, durchströmt werden. Die beiden Wärmeübertrager 21, 22 sind in hier nicht dargestellter Weise mit dem Montageträger 20 fest verbunden. In Strömungsrichtung hinter dem Montageträger 20 ist eine Lüfterzarge 24 angeordnet, die ihrerseits - was in dieser Darstellung nicht erkennbar wird - mit den Wärmeübertragern 21, 22 verbunden ist. Die Lüfterzarge 24 weist einen umlaufenden, umfangseitigen Bereich 25 auf, der über eine berührungslose Dichtung (nicht dargestellt) gegenüber einem korrespondierenden Umfangsbereich 26 des Montageträgers 20 abgedichtet ist. Am stromabwärtigen Ende der Lüfterzarge 24 ist eine kreisförmige Öffnung 27 angeordnet, die von einem kurzen zylindrischen Mantelstück 28 gebildet wird, in welchem ein gestrichelt dargestellter Lüfter 29 umläuft. Der Lüfter 29 kann entweder am nicht dargestellten Motorblock befestigt und vom Fahrzeugmotor angetrieben werden, oder er ist als Elektrolüfter ausgebildet und ist dann mitsamt dem Elektromotor an der Zarge 24 befestigt.

Die Umgebungsluft, dargestellt durch den Pfeil L, gelangt durch einen nicht dargestellten Kühlergrill oder Lufteinlauf des Fahrzeuges in das Fahrzeug und trifft auf die Stirnflächen 23, durchströmt beide Wärmeübertrager 21, 22, wird auf der Rückseite der Wärmeübertrager 21, 22 durch die Lüfterhaube 24 kanalisiert und durch die Öffnung 27 über den Lüfter 29 abgesaugt

**Fig. 4** zeigt Einzelheiten X und Y aus Fig. 3, d. h. die Abdichtbereiche 25/26 der Lüfterzarge 24 gegenüber dem Montageträger 20. Die beiden Wärmeübertrager 21, 22 sind - wie bereits oben angedeutet - gegenüber dem Montageträger 20 befestigt, was durch Schraub- oder Bolzenverbindungen 30, 31 angedeutet ist. Die Aufnahmepunkte für die Wärmeübertrager 21, 22 können auch vor und hinter der Zeichenebene liegen. In der Regel sind die Wärmeübertrager über elastische Lager gegenüber dem Montageträger 20 abgestützt, so dass sich Relativbewegungen zwischen den Wärmeübertragern und dem Montageträger 20 ergeben können. Die Lüfterzarge 24 ist über Befestigungspunkte 32, 33 an den Wärmeübertragern 21, 22 befestigt. Die Abdichtung der Lüfterzarge 24 in ihrem stromaufwärtigen Bereich erfolgt - wie bereits zu Fig. 3 erwähnt - durch den Umfangsbereich 25, der als U-förmiger Falz 34 ausgebildet ist Der Umfangsbereich 25 der Lüfterzarge 24 arbeitet mit einem korrespondierenden Bereich 26 des Montageträgers 20 zusammen. Dieser Bereich 26 weist eine umlaufende Rippe 35 auf, die in den Falz 34 eingreift und somit als berührungslose Dichtung wirkt, die auch ein Spiel in Richtung von drei Achsen (Relativbewegung) der Lüfterzarge 24 gegenüber dem Montageträger 20 zulässt. Letzteres ist wegen der erwähnten elastischen Lagerung der Wärmeübertrager im Montageträger 20 von Vorteil bzw. notwendig. Der Umfangsbereich 25 bildet mit dem Bereich 26 ein Dichtungspaar 36, welches berührungslos und mit Spiel arbeitet und z. B. auch als Labyrinthdichtung ausgebildet sein kann.

Aufgrund der zuvor beschriebenen Befestigung und Abdichtung der Lüfterhaube 24 wird verhindert, dass der Lüfter 29 Luft außerhalb der Wärmeübertrager 21, 22 ansaugt, da dieser Bereich durch die Lüfterhaube 25 abgedeckt und abgedichtet ist. Darüber hinaus wird eine Rezirkulation der vom Lüfter 29 geförderten Luft, d. h. ein Wiederansaugen von erwärmter Luft verhindert.

Der Einbau und die Montage der Wärmeübertrager 21, 22 soll vorzugsweise von hinten, d. h. in Fahrtrichtung erfolgen. Die Wärmeübertrager 21, 22 werden also entgegen der Richtung des Pfeils L in den Montageträger 20 eingesetzt und an diesem befestigt. Danach erfolgt die Befestigung der Lüfterzarge 24 an den Befestigungspunkten 32, 33, also ebenfalls von hinten. Gleichzeitig mit dieser Befestigung der Lüfterhabe 24 erfolgt der Eingriff des Dichtfalzes 34 mit der Rippe 35 am Montageträger 20, so dass gleichzeitig die Abdichtung der Lüfterzarge 24 gegenüber dem Montageträgers 20 hergestellt wird. Im Falle einer Reparatur, z. B. beim Austausch des Montageträgers 20 können die Wärmeübertrager 21, 22 nach Lösen deren Verbindung mit dem Montageträger 20 im Fahrzeug verbleiben, und deren Anschlüsse, z. B. an dem Kühlmittel oder Kältemittelkreislauf, müssen nicht geöffnet werden. Allerdings können die Wärmeübertrager auch aus dem Montageträger aus ihren Lagerpositionen entnommen werden - dazu muss die Verbindung zwischen den Wärmeübertragern und der Lüfterzarge gelöst werden.

Durch die erfindungsgemäße Ausbildung, d. h. die in den Montageträger 20 integrierte Lüfterzarge 24 wird die Teilezahl reduziert, weil praktisch die gesamte Fläche des Montageträgers durch eine Lüfterzarge, d. h. ein Teil abgedeckt und abgedichtet wird. Dadurch ergeben sich natürlich auch Erleichterungen bei der Montage.

## Patentansprüche

1. Montageträger (2) für ein Frontmodul (1) eines Kraftfahrzeuges mit einem inneren, stirnseitigen Bereich zur Aufnahme von Wärmeübertragern (21,22) und einem äußeren, sich außerhalb der Wärmeübertragen (21,22) erstreckenden Strukturbereich, wobei die Wärmeübertrager (21,22) von einem Luftstrom durchsetzt werden, der von einem stromabwärts zu den Wärmeübertragern (21,22) angeordneten Lüfter förderbar ist, **dadurch gekennzeichnet, dass** hinter den Wärmeübertragern (21, 22) eine Lüfterzarge (24) angeordnet und an den Wärmeübertragern (21,22) befestigt ist, die sowohl den durch die Wärmeübertrager (21, 22) strömenden Luftstrom abdichtet als auch einen außerhalb der Wärmeübertrager (21, 22) auftretenden Bypass- oder Rezirkulationsstrom unterbindet, wobei die Lüfterzarge (24) einen sich außerhalb der Wärmeübertrager (21, 22) erstreckenden Abdeckbereich mit einem ersten peripheren Dichtungsmittel (25) aufweist, das mit einem korrespondierenden zweiten Dichtungsmittel (26) am Montageträger (20) zusammenwirkt.

2. Montageträger nach Anspruch 1, **dadurch gekennzeichnet, dass** das erste Dichtungsmittel als U-förmiger Falz (34) am Umfang (25) der Lüfterzarge (24) und das zweite Dichtungsmittel als umlaufende, in den Falz (34) eingreifende Rippe (35) ausgebildet sind.

3. Montageträger nach Anspruch 1 oder 2, **dadurch gekennzeichnet, dass** das erste (34) und das zweite (35) Dichtungsmittel als Labyrinthdichtung ausgebildet sind.

4. Montageträger nach Anspruch 1,2, oder 3, **dadurch gekennzeichnet, dass** das erste und das zweite Dichtungsmittel eine berührungslose, gegeneinander bewegliche Dichtpaarung (36) bilden.

5. Montageträger nache Anspruch 4, **dadurch gekennzeichnet, dass** die Dichtungsmittel (34, 35) in einer Ebene relativ zueinander beweglich sind, die im Wesentlichen senkrecht zur Luftdurchströmungsrichtung (L) durch die Wärmeübertrager (21,22) angeordnet ist

6. Montageträger nach einem der Ansprüche 1 bis 5, **gekennzeichnet durch** einen geschlossen Rahmen (4).

7. nach einem der Ansprüche 1 bis 5, **gekennzeichnet durch** einen U-förmigen, nach unten offenen Rahmen (4').

8. Montageträger nach einem der vorhergehenden Ansprüche, **dadurch gekennzeichnet, dass** die Wärmeübertrager (21, 22) entgegen der Luftströmungsrichlung (L) in den Montageträger (20) einsetzbar sind.

9. Montageträger nach einem der vorhergehenden Ansprüche, **dadurch gekennzeichnet, dass** innerhalb der Lüfterzarge (24) ein motorfester Lüfter (29) angeordnet ist

10. Montageträger nach einem der Ansprüche 1 bis 8, **dadurch gekennzeichnet, dass** der Lüfter (29) als Elektrolüfter ausgebildet und an der Lüfterzarge (24) befestigt ist.

## Claims

1. Mounting bracket (2) for a front-end module (2) of a motor vehicle having an inner, end-face area for accommodating heat exchangers (21, 22) and an outer structural area extending outside the heat exchangers (21, 22), an air stream passing through the heat exchangers (21, 22), which air stream may be conveyed by a fan arranged downstream of the heat exchangers (21, 22), **characterized in that** a fan frame (24) is arranged downstream of the heat exchangers (21, 22), and attached to the heat exchangers (21, 22), which fan frame (24) both seals off the air stream flowing through the heat exchangers (21, 22) and stops a bypass or recirculation stream from arising outside the heat exchangers (21, 22), the fan frame (24) comprising a cover area which extends outside the heat exchangers (21, 22), which cover area has a first peripheral sealing means (25), which cooperates with a corresponding second sealing means (26) on the mounting bracket (20).

2. Mounting bracket according to Claim 1, **characterized in that** the first sealing means takes the form of a U-shaped channel (34) at the periphery (25) of the fan frame (24) and the second sealing means takes the form of a continuous rib (35) engaging in the channel (34).

3. Mounting bracket according to Claim 1 or 2, **characterized in that** the first (34) and second (35) sealing means take the form of a labyrinth seal.

4. Mounting bracket according to Claim 1, 2 or 3, **characterized in that** the first and second sealing means form a contactless sealing pair (36) movable relative to one another.

5. Mounting bracket according to Claim 4, **characterized in that** the sealing means (34, 35) are movable relative to one another in a plane which is arranged substantially perpendicularly to the direction of air throughflow (L) through the heat exchangers (21, 22).

6. Mounting bracket according to one of Claims 1 to 5, **characterized by** a continuous frame (4).

7. Mounting bracket according to one of Claims 1 to 5, **characterized by** a U-shaped frame (4') open at the bottom.

8. Mounting bracket according to one of the preceding claims, **characterized in that** the heat exchangers (21, 22) may be inserted into the mounting bracket (20) contrary to the direction (L) of air flow.

9. Mounting bracket according to one of the preceding claims, **characterized in that** a fan (29) fixed to the engine is arranged inside the fan frame (24).

10. Mounting bracket according to one of Claims 1 to 8, **characterized in that** the fan (29) takes the form of an electric fan and is attached to the fan frame (24).

## Revendications

1. Support de montage (2) pour un module frontal (1) d'un véhicule automobile, comprenant une région interne du côté frontal, pour recevoir des échangeurs de chaleur (21, 22) et une région structurelle externe, s'étendant en dehors des échangeurs de chaleur (21, 22), les échangeurs de chaleur (21, 22) étant parcourus par un flux d'air qui peut être refoulé par un ventilateur disposé en aval des échangeurs de chaleur (21, 22), **caractérisé en ce que** derrière les échangeurs de chaleur (21, 22) est disposé un capotage de ventilateur (24) qui est fixé aux échangeurs de chaleur (21, 22), et qui isole hermétiquement le flux d'air s'écoulant à travers les échangeurs de chaleur (21, 22) tout en supprimant un flux de dérivation ou de recirculation produit à l'extérieur des échangeurs de chaleur (21, 22), le capotage de ventilateur (24) présentant un premier moyen d'étanchéité périphérique (25) s'étendant en dehors des échangeurs de chaleur (21, 22), qui coopère avec un deuxième moyen d'étanchéité correspondant (26) sur le support de montage (20).

2. Support de montage selon la revendication 1, **caractérisé en ce que** le premier moyen d'étanchéité est réalisé sous forme de pli (34) en forme de U à la périphérie (25) du capotage de ventilateur (24) et le deuxième moyen d'étanchéité est réalisé sous forme de nervure périphérique (35) venant en prise dans le pli (34).

3. Support de montage selon la revendication 1 ou 2, **caractérisé en ce que** le premier (34) et le deuxième (35) moyen d'étanchéité sont réalisés sous forme de joint d'étanchéité à labyrinthe.

4. Support de montage selon la revendication 1, 2 ou 3, **caractérisé en ce que** le premier et le deuxième moyen d'étanchéité forment un appariement d'étanchéité (36) sans contact, mutuellement mobile.

5. Support de montage selon la revendication 4, **caractérisé en ce que** les moyens d'étanchéité (34, 35) peuvent se déplacer l'un par rapport à l'autre dans un plan, qui est disposé essentiellement perpendiculairement au sens d'écoulement de l'air (L) à travers les échangeurs de chaleur (21, 22).

6. Support de montage selon l'une quelconque des revendications 1 à 5, **caractérisé par** un cadre fermé (4).

7. Support de montage selon l'une quelconque des revendications 1 à 5, **caractérisé par** un cadre en forme de U ouvert vers le bas (4').

8. Support de montage selon l'une quelconque des revendications précédentes, **caractérisé en ce que** les échangeurs de chaleur (21, 22) peuvent être insérés dans le support de montage (20) dans le sens opposé au sens d'écoulement d'air (L).

9. Support de montage selon l'une quelconque des revendications précédentes, **caractérisé en ce qu'**un ventilateur (29) fixé au moteur est disposé à l'intérieur du capotage de ventilateur (24).

10. Support de montage selon l'une quelconque des revendications 1 à 8, **caractérisé en ce que** le ventilateur (29) est réalisé sous forme de ventilateur électrique et est fixé sur le capotage de ventilateur (24).
